# EUROPEAN PATENT SPECIFICATION

(11) **EP 3 532 384 B1**
(45) Date of publication and mention of the grant of the patent: **28.04.2021**
(21) Application number: 17792155.8
(22) Date of filing: 26.10.2017
(51) Int. Cl.: B64D 11/06

(54) **A PASSENGER SEATING ARRANGEMENT WITH SHARED ACCESS**
PASSAGIERSITZANORDNUNG MIT GEMEINSAMEM ZUGANG
AGENCEMENT DES SIÈGES DE PASSAGER AVEC ACCÈS PARTAGÉ

(30) Priority: 28.10.2016 GB 201618271
(43) Date of publication of application: 04.09.2019
(73) Proprietor: Acumen Design Associates Limited, London WC1V 7BD (GB)
(72) Inventor: WILLIAMS, Andrew Stephen Fereday, London WC1V 7BD (GB)
(74) Representative: Abel & Imray
(86) International application number: PCT/GB2017/053234
(87) International publication number: WO 2018/078376

(56) References cited:
- US-A1- 2015 166 184

## Description

### Technical Field

The present invention relates to an aircraft cabin comprising a passenger seating arrangement.

### Background of the Invention

Aircraft passenger seating arrangements having convertible seat units that have both a seat configuration, and a flat-bed configuration are well-known. These convertible seat units are typically provided in business class or first class cabins of an aircraft. In the seat configuration, the seat unit typically provides a relatively upright seat, whereas in the bed configuration, the seat unit tends to form a substantially planar sleeping surface for supporting the passenger. The seat units shown in GB2326824 (British Airways), WO03013903 (Virgin Atlantic) and US 7,178,871 (British Airways) are examples of such convertible seat units (often referred to as having 'lie-flat' seats) that have both a seat configuration, and a flat-bed configuration which offers improved comfort over a reclined seat. Lie-flat seats have been increasingly popular over the last decade or so.

GB2326824 and WO03013903 mentioned above are examples of so-called herringbone arrangements in which the seats are at an angle to the longitudinal axis of the aircraft. By angling the seat units in such a way, the packing efficiency may be increased.

US 7,178,871 mentioned above, and WO 2007/072045 (also British Airways) are examples of seating arrangements having pairs of seat units facing in opposite directions. Such an arrangement may be space-efficient across the width of the cabin because the seating space of one seat unit may extend over the leg space of the adjacent, oppositely facing, seat unit. However, there is an associated problem in such seat designs in that to access seat units that are not directly adjacent an aisle, it tends to be necessary for the passenger to 'step-over' the space of a neighbouring passenger. This can detrimentally affect the feeling of privacy and personal space for the passengers in one or both of the relevant seats.

The seat units in WO2009/073244 (BE Aerospace) face the same direction (in each column) and are arranged in parallel. However this arrangement also suffers from the problem that the window seat passenger needs to 'step-over' the space of a neighbouring passenger in order to get to their seat unit.

US 8,348,195 (American Airlines) discloses a herringbone arrangement in which alternate seat units face in alternate directions. Each seat has independent access to an adjacent aisle so passengers do not have to step-over the neighbouring seat to access their own seat. This is beneficial in terms of passenger's privacy, but has been found to have an impact in terms of the packing efficiency of the seating arrangement. The arrangement in US 8,348,195 is shown for use on a wide-body aircraft and comprises a two-column-wide array along the centre of the aircraft, bounded by aisles either side and with single-width columns against the aircraft sidewall.

WO2014049362 (Acumen Design Associates) describes an arrangement having a plurality of pairs of seat units, each pair comprising a non-aisle seat unit arranged parallel to the longitudinal axis of the aircraft, and an aisle seat unit angled thereto, so as to provide a passenger access path to the non-aisle seat unit. Such an arrangement addresses some of the above-mentioned problems, but there remains a desire to provide other space-efficient arrangements that have adequate access to each seat unit.

### Summary of the Invention

According to a first aspect of the invention, there is provided an aircraft comprising a passenger seating arrangement according to claim 1. Further optional features are described in the dependent claims 2-14.

### Description of the Drawings

Various embodiments of the invention will now be described, by way of example only, with reference to the accompanying schematic drawings of which:
Figure 1 is a plan view of a business class cabin on an aircraft according to a first embodiment of the invention;
Figure 2 is a close-up plan view of part of the arrangement of Figure 1;
Figure 3 is a perspective view of two pairs of seat units in one of the columns of the cabin of Figure 1;
Figure 4 is a perspective view of the two pairs of seat units of Figure 3, but with the seat units in the flat bed configuration;
Figure 5 is a view of the foot receiving end on an outwardly-facing seat unit, from a viewpoint within the seat unit;
Figure 6 is a view of the foot receiving end on an inwardly-facing seat unit, from a viewpoint within the seat unit;
Figure 7 is a perspective view of the two pairs of seat units in Figure 3 but with the intra-pair privacy screen lowered;
Figures 8a and 8b are perspective views of the pairs of seat units of Figure 3, but with the inter-pair privacy screen lowered;
Figure 9 is a plan view of a business class cabin on an aircraft according to a second embodiment of the invention;
Figure 10 is a plan view of a business class cabin on an aircraft according to a third embodiment of the invention;
Figure 11 is a close-up plan view of part of the arrangement of Figure 10;

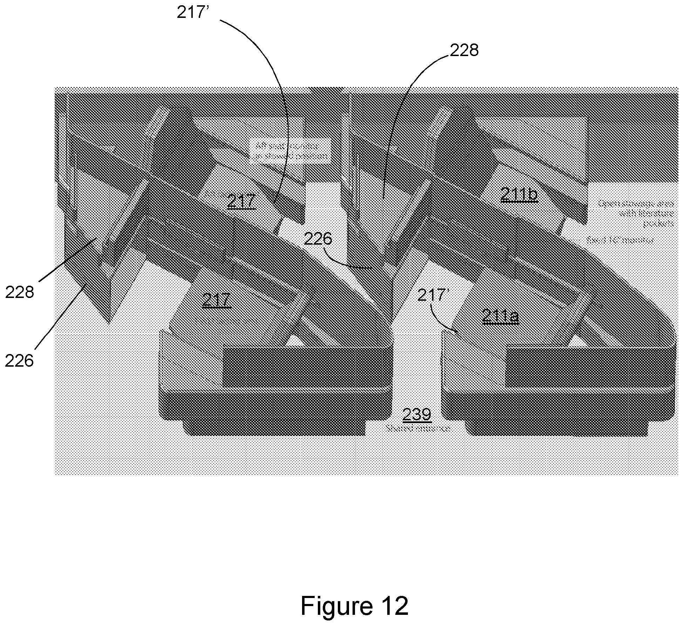

Figure 12 is a perspective view showing two of the pairs of seat units, both of which are in the seating configuration;
Figure 13 is a perspective view of Figure 12, but with the seat units in the flat bed configuration;
Figure 14 is a perspective view part of the seat units showing the shared entrance way;
Figure 15 is a seating layout in the front of an aircraft cabin according to a further embodiment;
Figure 16 is a close up view of part of the layout in Figure 15;
Figure 17 is a view from an inwardly-facing seat unit of the layout of Figure 15 when it is in the flat-bed configuration;
Figures 18a, 18b and 19 are perspective views of two neighbouring pairs of seat units in the layout of Figure 15; and
Figures 20a and 20b are perspective views from the view point of an inwardly-facing seat unit in the layout of Figure 15.

### Detailed Description

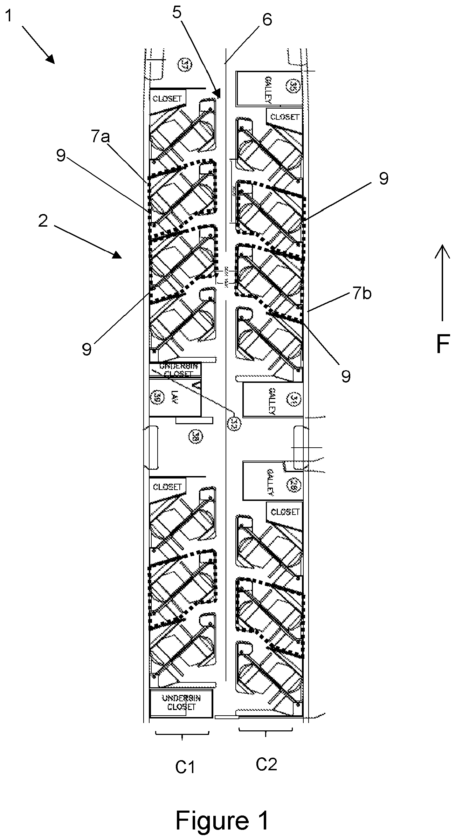

Figure 1 is a schematic plan view of a business class cabin 2 in an aircraft of a first embodiment of the invention. The cabin 2 comprises a passenger seating arrangement 1.

The passenger seating arrangement 1 comprises a first column of seat units C1 and second column of seat units C2. The first and second columns C1, C2 are separated by an aisle 5 aligned with the longitudinal axis 6 of the cabin. As is most clearly indicated in Figure 1, the columns of seat units C1, C2 and the aisle 5 all extend in a longitudinal direction parallel to longitudinal axis 6 of the cabin 2. The aircraft cabin is defined by sidewalls 7a, 7b. The cabin 2 comprises several non-seating areas, such as galleys and lavatories, but these are largely conventional and are not described further with reference to the present invention.

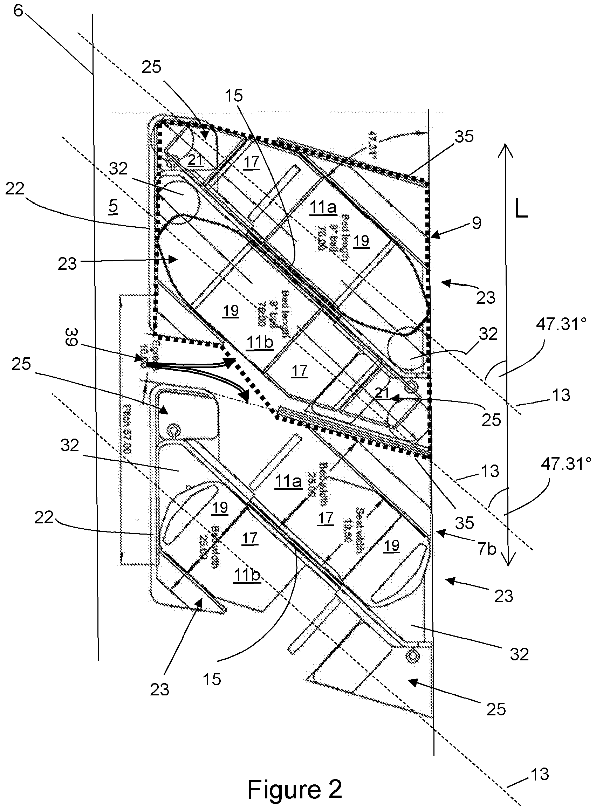

Each column C1, C2 comprises several pairs 9 of seat units (some example pairs 9 in each column are highlighted by way of a schematic thicker dashed outline in Figures 1 and 2). The pairs 9 of seat units in each column C1, C2 are substantially identical except for their orientation/position.

In each column C1, C2, the pairs 9 of seat units are arranged adjacent to one another along the longitudinal direction (i.e. neighbouring pairs 9 of seat units are located along the length of each column C1, C2).

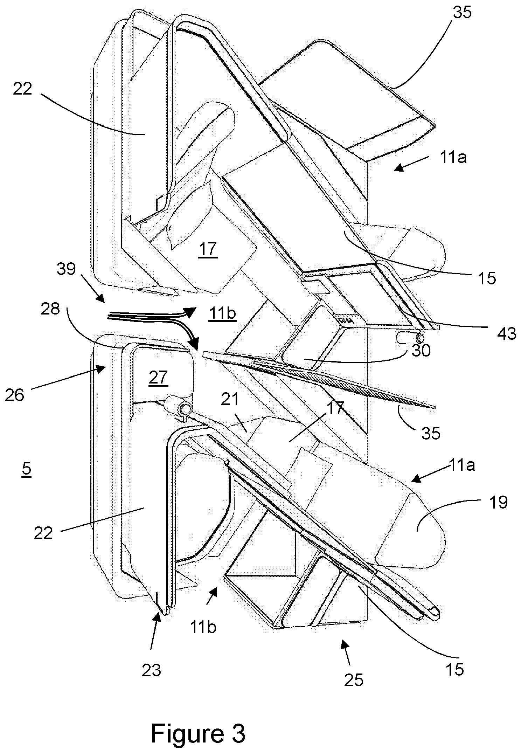

Figures 2 to 8b show close-up views of a few of the adjacent pairs 9 of seat units, and features of those pairs of seat units are described below in detail. The pairs of seat units in Figures 2 to 8b are taken from column C2 in Figure 1. In the description below, where reference is made to only the one pair 9 of seat units, or to only one seat unit 11a, 11b within that pair, it will be appreciated that the description applies equally to other corresponding pairs 9 or other corresponding seat units 11a, 11b in the seating arrangement 1. Also, for the sake of clarity, not all reference numerals used in Figures 1 to 8b are necessarily repeated in the other drawings (e.g. in the others of Figures 1 to 8b) nor are they necessarily shown for every occurrence of that feature. The other seat units shown in Figures 1 to 9 do, of course, have those features but some of them are merely not labelled.

Referring now to Figure 2, each pair 9 of seat units comprises: an inwardly-facing seat unit 11a and an outwardly-facing seat unit 11b. The inwardly-facing seat unit 11a is angled at 47.31 degrees to the longitudinal direction L (which is parallel to the longitudinal axis 6 of the cabin) and faces inwardly towards the aisle 5. The outwardly-facing seat unit 11b is angled at the same angle (47.31 degrees) to the longitudinal direction but faces outwardly away from the aisle 5.

The angle of the seat unit to the longitudinal direction is measured by the angle that the central seat unit axis 13 makes with the longitudinal direction L (and the aisle axis 6). The central axis of a seat unit is the axis that bisects the seat body of the respective seat unit 11a/11b.

In the first embodiment, the inwardly-facing seat unit 11a faces forwards (relative to the direction of flight F (see Figure 1)), whereas the outwardly-facing seat unit faces backwards (relative to the direction of flight F).

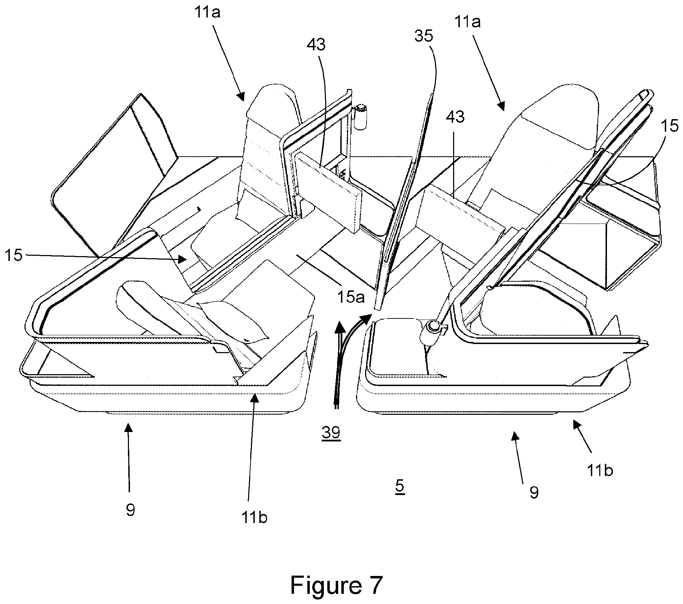

The inwardly-facing seat unit 11a and outwardly-facing seat unit 11b in each pair 9 of seat units, border each other along an intra-pair privacy screen 15 that defines a shared boundary. That boundary runs parallel to the central axis 13 of the seat units (i.e. at around 47 degrees to the longitudinal direction). The privacy screen 15 is selectively retractable such that it can be raised or lowered depending on whether passengers in the seat units wish to interact with each other (described in more detail below with respect to Figure 7).

Each seat unit 11a, 11b comprises a seat body 23 and a foot receiving end 25.

The seat body 23 has a moveable seat pan 17, movable back rest 19 and moveable leg support 21. A shroud 22 surrounds the back rest 19 of the outwardly-facing seat units 11b, whereas the back rest 19 of the inwardly-facing seat units 11a is adjacent the aircraft sidewall 7b. The moveable seating elements 17, 19 and 21 are configurable from a seating configuration into a lie flat configuration (described in more detail below)

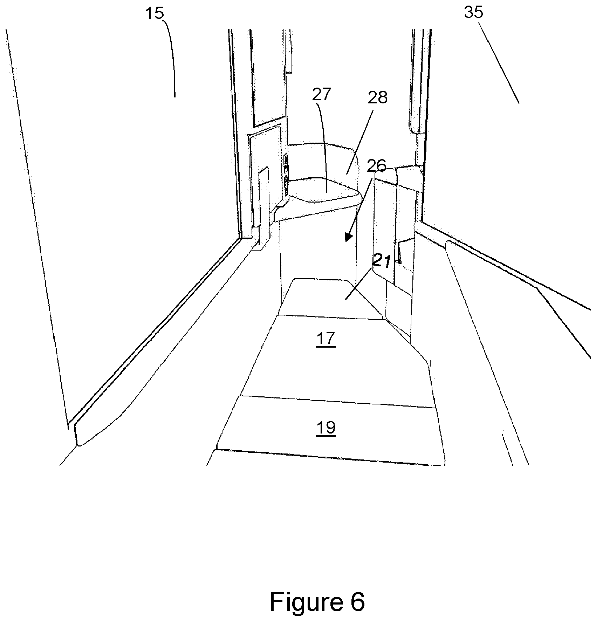

The seat bodies 23 of the inwardly and outwardly-facing seat units are substantially identical. However, the side furniture associated with each seat body, and the foot receiving end 25 of the inwardly and outwardly-facing units differ. The foot receiving end of the inwardly-facing seat units 11a is best shown in Figure 6 (which is a view from within one of the inwardly-facing seat units 11a). On the inwardly-facing seat units 11a, the foot receiving end 25 is spaced apart from the seat body 23 and comprises an ottoman. The foot receiving end 25 has a curved end wall 26 extending from the cabin floor, a central shelf (not visible in the Figures) to form the ottoman, and a table surface 27. The end wall 26 defines a partially enclosed space into which the passenger may insert their feet (and place them of the central shelf if wanted). A divider 28 shields the table surface 27 from the passenger in the adjacent seat unit 11b (but in other embodiments the divider may equally be arranged to shield the table surface from the passenger in the inward facing seat unit such that the table surface 27 is instead accessible to the passenger in the adjacent (outwardly-facing) seat unit).

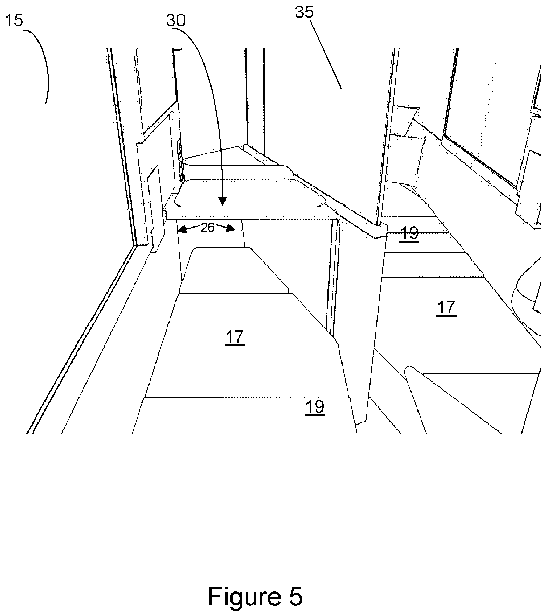

The foot receiving end 25 of the outwardly-facing seat units 11b is best shown in Figure 5 (which is a view from within one of the outwardly-facing seat units 11b). On the outwardly-facing seat units 11b, the foot receiving end 25 does not include an ottoman. It comprises an end wall 26 (defined in part by the structure of the seat unit and defined in part by the aircraft sidewall 7a/7b) that defines a partially enclosed space into which the passenger may place their feet. The space does not include a central shelf as per the inwardly-facing seat units) but the seat unit does comprise a table surface 30 spaced apart from the seat body 23 and located at a height above the flat sleeping surface (see below). The seat body 23, when in the flat bed configuration, extends under the table surface 30 and into the space.

The foot receiving end 25 of each outwardly-facing seat unit 11b has a different planform shape (i.e. as viewed in Figures 1 and 2) to the foot receiving end 25 of each inwardly-facing seat unit 11a. Since the foot receiving end 25 of the outwardly-facing seat unit 11b is remote from the aisle 5, it may include, for example, a relatively large table surface 30. In contrast, the foot receiving end of the inwardly-facing seat unit tends to have, for example, a smaller table surface 28 to allow adequate access to the seat units 11a, 11b (see below).

The head-receiving end of each outwardly-facing seat unit 11b adjoins the structure of the foot receiving end 25 of the inwardly-facing seat unit in that pair 9. There is no access path between those parts of the pair of seat units, and the space is instead primarily occupied by ancillary bed extension surface 32 located behind the seat back of the outwardly-facing seat unit (see Figure 2).

Each seat unit 11a, 11b is configurable between a seating configuration and a flat-bed configuration. In the seating configuration (shown for the lower pair of seat units in Figure 2) the moveable elements 17, 19, 21 of the main body 23 form an upright passenger seat with the foot receiving end 25 located in front of the seat. The moveable seat pan 17, movable back rest 19 and moveable leg support 21 may, however, be configured into a flat sleeping surface (shown in the upper pair 9 in Figure 2) such that the seat unit is in a flat-bed configuration. The flat sleeping surface is formed from the moveable seat elements 17, 19, 21 being mutually coplanar, and also being coplanar with an ancillary bed extension surface 32 located behind the seat back 19. Together, these surfaces form a useable bed length of 190,5 cm (76 inches) when the seat unit is in the flat bed configuration.

The use of moveable seat elements and conversion between a seating configuration and a lie-flat configuration is known *per* se and will not be described in further detail herein. The benefits enabled by embodiments of the present invention tend to instead reside in other aspects of the seat units, and their layout, as will now be described in more detail.

Firstly, the passenger seating arrangement 2 further comprises a plurality of shared entrance ways 39 located between a neighbouring pair 9 of seat units 11a, 11b. Each entrance way 39 is defined between the wall 26 of the foot receiving end 25 of the inwardly-facing sear unit 11a, and the adjacent side furniture of the (head receiving end of) the outwardly-facing seat unit 11b.

Each entrance way 39 is a shared entrance way to provide exclusive access from the aisle 5 to two seat units 11a, 11b. Those two seat units 11a, 11b are an inwardly-facing seat unit 11a of one pair 9 and the neighbouring outwardly-facing seat unit 11b of the neighbouring pair 9. An obstacle free access path, shown with large arrows in Figures 2 to 4, extends from the shared entrance way 39 to the seat units 11a, 11b.

The first embodiment of the invention recognises that, in the context of an alternately facing herringbone arrangement, the packing efficiency of the seating arrangement can be improved by providing shared entrance ways 39 to two seat units 11a, 11b. For example, the floor-space that would otherwise be used for a dedicated entrance to only, for example, the inwardly-facing seat unit 11b, can instead be occupied by part of the neighbouring outwardly-facing seat unit 11b. This 'saved space' may instead be occupied by part of the seat unit that forms the sleeping surface, by additional side furniture/storage or by a combination of both.

A feeling of privacy remains important, and accordingly between each pair of seat units 9 is an inter-pair privacy screen 35. As is most clearly demonstrated by the views in Figures 5 and 6, the privacy screen 35 is of sufficient height, and extends sufficiently far from the sidewall 7b, to obstruct a line of sight between passengers in the inwardly-facing seat unit 11a of one pair, and the neighbouring outwardly-facing seat unit 11b of the neighbouring pair. However, unlike some seat units in the prior art, the privacy screen does not extend all the way along the mutual boundary between adjacent seat units 11a, 11b. Instead, in the first embodiment of the invention, the privacy screen 35 extends only part-way between the inwardly-facing seat unit 11a of one pair and the neighbouring outwardly-facing seat unit 11b of the neighbouring pair, such that it leaves an opening 41 (schematically indicated by dash-dot lines in Figure 2) through which a passenger may pass to access the inwardly-facing seat unit 11b. Embodiments of the invention recognise that a sense of privacy and personal space may be obtained by screening the line of sight between two seat units, whilst not necessarily fully enclosing one side of one of those seat unit. This thus allows access to both seat units 11a, 11b via the shared entrance way 39, whilst maintaining privacy.

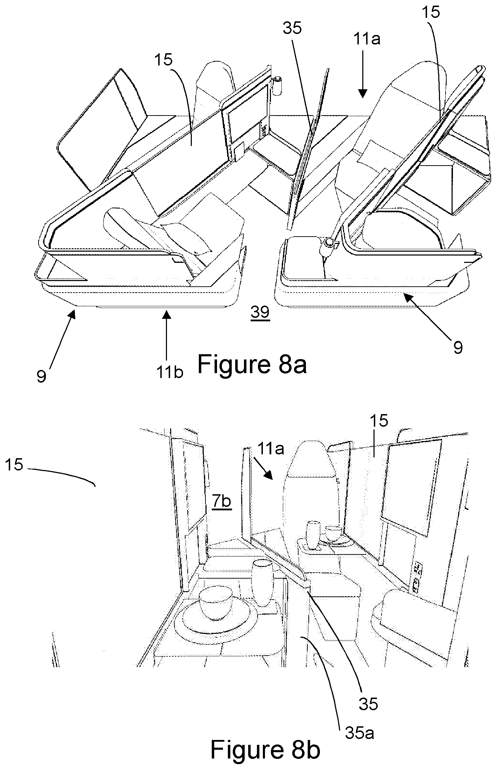

Referring now to Figures 8a and 8b, embodiments of the present invention also allow passengers in the inwardly-facing seat unit 11a of one pair, and the neighbouring outwardly-facing seat unit 11b of another pair, to selectively interact if and when they would like to. Specifically, the inter-pair privacy screen 35 is operable from a raised configuration (in which it screens the line of sight) to a lowered configuration shown in Figures 8a and 8b. Figure 8b is a view from the seat of a passenger in the outwardly-facing seat unit 11b. A portion of the privacy screen 35 has been lowered into a base unit 35a. This opens up the line of sight between the two passengers in the seat units 11a, 11b and may be desirable when the two passengers are travelling together. Part of the intra-pair screen 15 also houses a fold-out monitor 43, which (when deployed - see Figure 7) may also assist with a feeling of privacy.

Referring back to Figures 1 to 6, within each pair 9 of seat unit 11a, 11b, is an intra-pair privacy screen 15, screening the passengers of adjacent inwardly- and outward-facing seat units, within each pair 9, from one another. Referring now to Figure 7, embodiments of the present invention allow passengers in the inwardly- and outwardly-facing seat units 11a, 11b of each pair, to selectively interact if and when they would like to. Figure 7 shows the intra-pair screen 15 in the right hand pair 9 of seat units, in a lowered configuration in which a portion of the privacy screen 15 has been lowered into a base unit 15a. This opens up the line of sight between the two passengers in the seat units 11a, 11b in that pair, and may be desirable when the two passengers are travelling together.

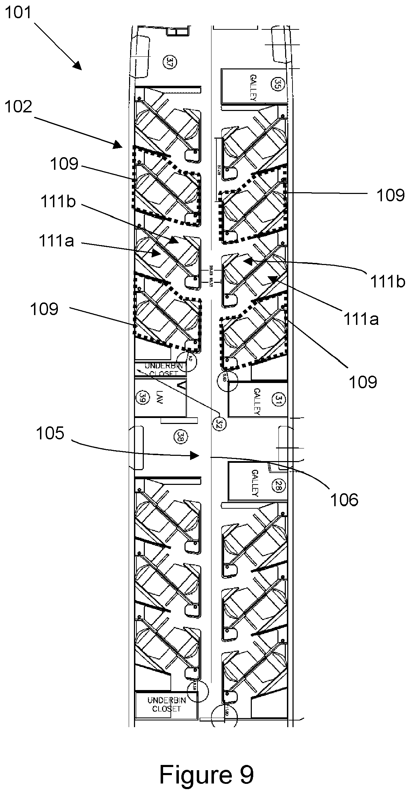

Figure 9 shows a cabin 102 according to a second embodiment of the invention. Features in the second embodiment of the invention that correspond to similar features in the first embodiment of the invention, are shown with the same reference numerals as in the first embodiment, but with the addition of the prefix '1' (or '10' where appropriate). The second embodiment is the same as the first embodiment except that the fore/aft orientation of the seat units 111a, 111b is swapped. In other words, the outwardly-facing seat units face 111b forwards, whereas the inwardly-facing seat units 111a face backwards.

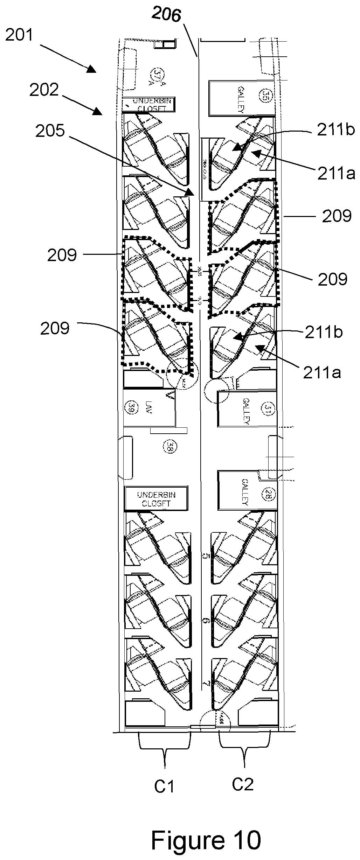

Figures 10 shows a cabin 202 according to a third embodiment of the invention. Features in the second embodiment of the invention that correspond to similar features in the first embodiment of the invention, are shown with the same reference numerals as in the first embodiment, but with the addition of the prefix '2' (or '20' where appropriate).

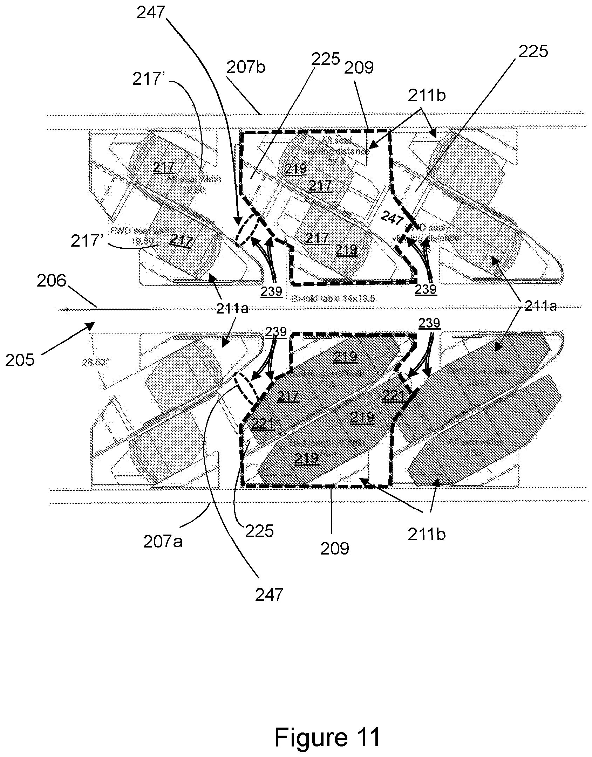

Figure 11 shows a close up view of six pairs 209 of seat units in the cabin 202. The upper seat units (in column C2 of Figure 10) are in the seating configuration, whereas two of the pairs of lower seat units (in column C1 of Figure 10) are shown in the flat bed configuration.

As in the first and second embodiments, the seating arrangement 201 comprises a multiplicity of pairs 209 of seat units arranged consecutively along the longitudinal direction. Each pair 209 comprises an inwardly-facing seat unit 211a facing towards the aisle 205, and an adjacent outwardly-facing seat unit 211b facing away from the aisle 205.

Unlike the earlier embodiments, the seat units 211a, 211b are all orientated at a lower angle to the longitudinal axis 206, namely 28.5 degrees. The inwardly-facing seat units 211a are also set back from the aisle 205 such that the shared entrance way 239 is defined between the shroud and side furniture of the outwardly-facing seat units 211b of adjacent pairs 209.

An obstacle free access path, shown with large arrows in Figure 11, extends from the shared entrance way 239 to the seat units 211a, 211b, and is useable by a passenger to access each of those seat units 211a, 211b without impinging on the other of the seat units 211b, 211a.

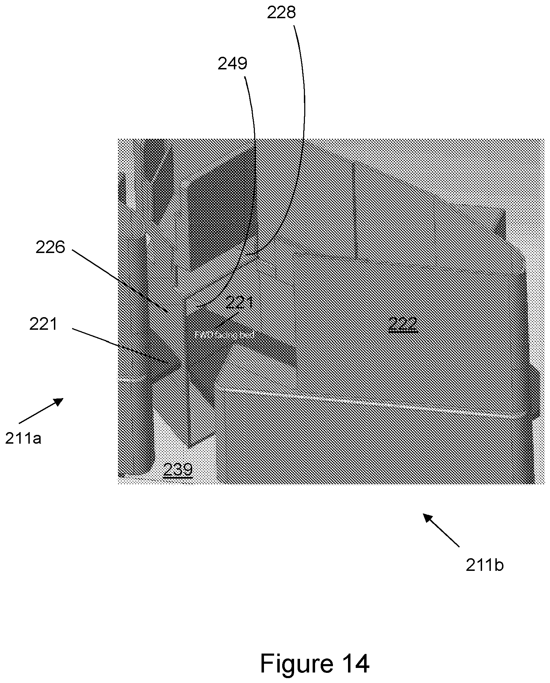

The foot receiving end 225 of the outwardly-facing seat units 211b comprises an enclosed ottoman having an end wall 226, and internal shelf 249 (visible in Figure 14), and an upper table surface 228. When the outwardly-facing seat units are in the flat bed configuration, the seat back 219 lies flat and the leg rest 221 extends to the ottoman to create a useable flat sleeping surface (of 189,23 cm (74,5 Inches)), extending from the foot receiving to the head receiving ends of the seat unit (for example see the lower pairs in Figure 11).

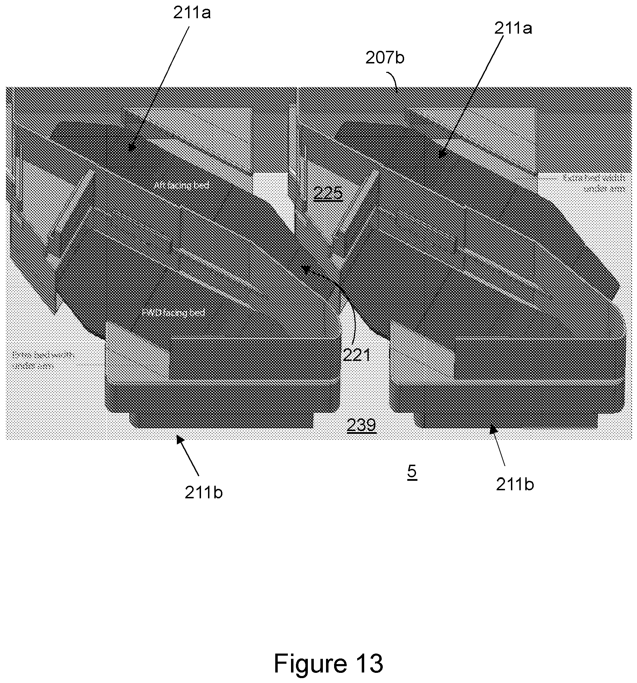

In contrast, the inwardly-facing seat units 211a in contrast are open-ended. In the flat bed configuration, a moveable seating element (namely the leg rest 221) extends to the foot receiving end of the seat unit (see lower pairs in Figures 11 and 13). However, when an inwardly-facing seat unit 211b is in the seating configuration, the moveable seating elements form a seat such that the leg rest 221 is retracted. Since the seat unit is open ended, this reveals an access space 247 (shown by a dotted oblong in Figure 11) between the sides of the respective foot and head receiving ends of the neighbouring outwardly-facing seat units 211b. The access space 247 is sized such that a passenger may pass through, in order to access the inwardly-facing seat unit 211a. The access to the inwardly-facing seat unit when the seat unit is placed into the seating configuration can be envisaged by considering the retraction of the leg rest 221 of the inwardly-facing seat unit 211a shown on the left-hand side of Figure 14.

Thus, in the second embodiment of the invention, access to two seat units 211a, 221b is enables via a dedicated, shared, entrance 239. Furthermore, by not using a fixed structure (such as an ottoman or end wall) at the end of the inwardly-facing seat units, the passenger to the inwardly-facing seat unit is provided with obstacle free access to their seat unit, despite it being set back from the aisle 205.

The seat pans 217 of all the seat units 211a, 22b in the second embodiment of the invention all comprise a chamfered corner 217'. The chamfered corner 217' is on the left-hand side of all seat pans (as viewed locally to that seat unit). This means that the chamfers tend to complement each other when the seat pans are in the flat bed configuration - specifically the tapering, narrow, side of the bed of one seat unit 211a is adjacent the tapering, narrow side, of the neighbouring seat unit 211b with which it shares access via the entrance way 239. This is best illustrated in Figure 11 for example. The description above is with reference to the seat units in column C2; in the opposing column C1, the chamfers are on the other side.

The chamfer 217' on the seat pan 217 of the outwardly-facing seat unit 211b also facilitates a relatively wide access path from the shared entrance way 239, especially as a passenger approaches the access opening 247 of the inwardly-facing seat unit 211a (see Figure 13 for example).

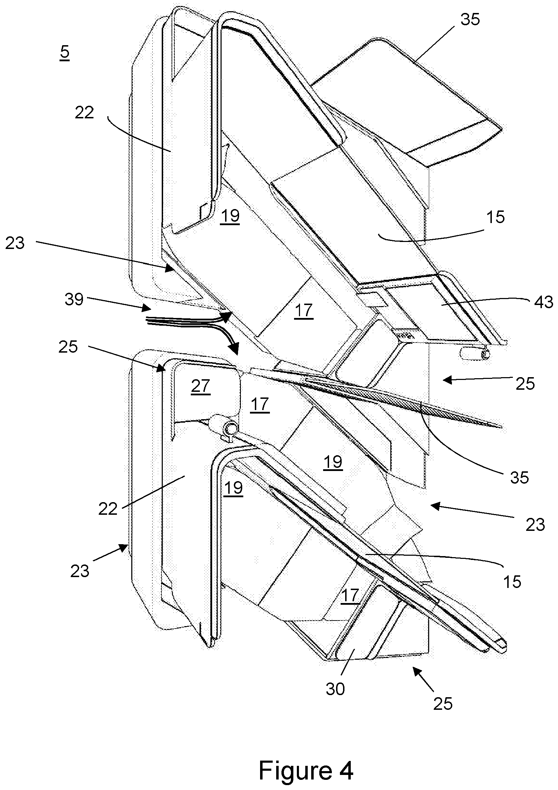

Referring back to the first and second embodiments, the chamfer 17' of the inwardly-facing seat units is also beneficial in facilitating a relatively wide access path from the shared entrance way 39, especially in creating a relatively open area for a passenger to stand between the two seat units access by the entrance 39 (illustrated in Figure 4 for example).

According to another embodiment of the invention (not shown) the passenger seating assembly is provided on a twin aisle aircraft. The arrangement comprise three parallel columns of pairs of seat units. Two columns are substantially as described herein with reference to the first embodiment, except that column C2 is adjacent a second aisle instead of the sidewall 7b. The other side of that aisle is another column, substantially identical to C2, but adjacent the sidewall. In another twin-aisle arrangement the central column is double-width and is symmetrical along the longitudinal axis of the aircraft.

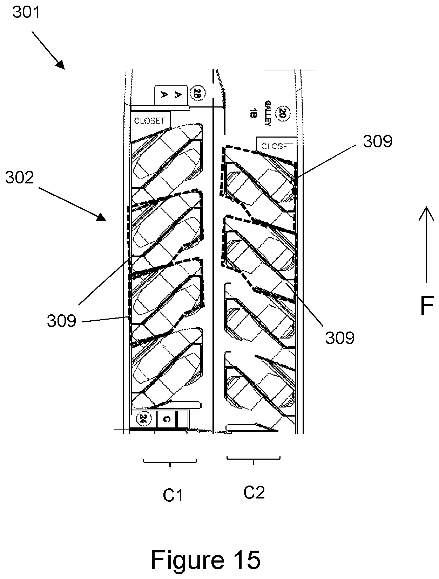

A further embodiment of the invention is shown in Figures 15 to 20b. Features in this further embodiment of the invention that correspond to similar features in the first embodiment of the invention, are shown with the same reference numerals as in the first embodiment, but with the addition of the prefix '3' (or '30' where appropriate). This further embodiment is broadly the same as the first embodiment except for the differences described below.

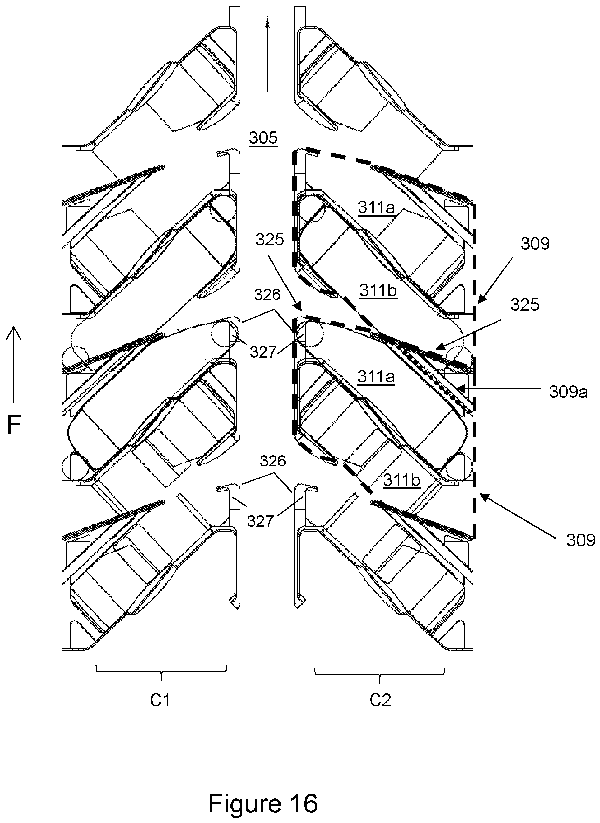

Figure 15 shows the seating layout 301 in the front of an aircraft cabin 302 according to the further embodiment. All the seat units in the left hand column C1 are shown in a flat-bed configuration, and all those on the right hand column C2 are shown in a seating configuration. The seat units are arranged in pairs 309, denoted by the dashed lines in Figure 15. Figure 16 shows a close up view of part of this layout, and in which the seat units are shown in a different mixture of seat and flat-bed configurations. The circles at each end of some of the seat units indicates the useable lengths of the seat units; it will be appreciated that these do not represent physical structures.

Referring now to Figure 16, two adjacent pairs 309 in column C2 are shown outlined in a dashed line. In contrast to the first embodiment, each outwardly-facing seat unit 311b underlaps the inwardly-facing seat unit 311a of the neighbouring pair in an underlap region 309a. This facilitates a relatively wide foot receiving end 325 to be created for the outwardly-facing seat unit 311b, whilst still providing a side surface to the side of the inwardly-facing seat unit 311a. In this respect it will be appreciated that the dashed-outline showing the boundary of the pairs 309 in Figures 15 and 16 is shown in planform for the upper-most part of the boundary only (the outline of the boundary actually changing with height).

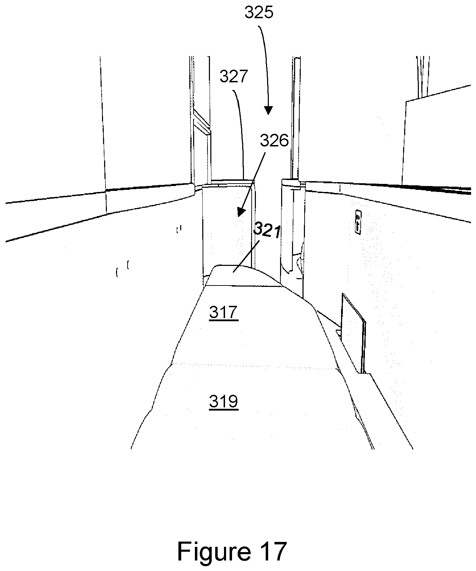

Referring to Figure 16 and also to Figure 17 (Figure 17 being a view from an inwardly-facing seat unit 311a when it is in the flat-bed configuration), the inwardly-facing seat units 311a do not, in contrast to the first embodiment, include an ottoman. Instead, the foot receiving end 325 of these inward facing units only comprise an end wall 326 structure that partitions the passenger from the aisle 305. The wall 326 does not include an internal shelf, and instead the leg rest 321 on the seat units 311a is configured to extend towards and up to the wall 326 to create the bed surface. By not having an internal shelf (i.e. not having an ottoman), the passenger experience is more closely matched to that of a passenger in an outwardly-facing seat unit 311b (which is similar to that in the first embodiment and also does not include an ottoman).

A narrow utility surface 327 extends from the top of the wall 326 at the foot receiving end 325, but does not protrude as far as the table top 27 in the first embodiment. This is beneficial in terms of ensuring straightforward access/egress to the inward facing seat unit 311a.

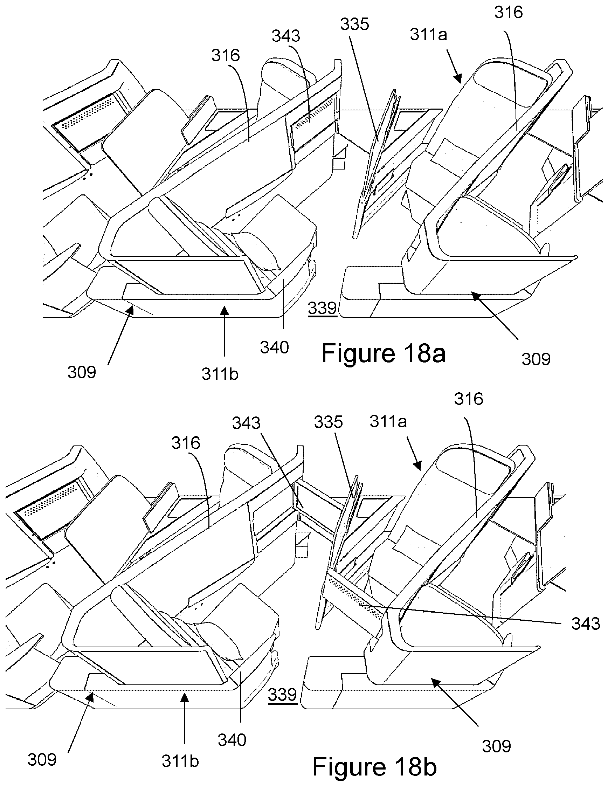

Some other differences from the first embodiment are shown in Figures 18a and 18b. These are perspective views of two neighbouring pairs of seat units 309. Firstly, the monitor 343 is pivoted along the edge furthest from the passenger (rather than closest to the passenger as per the first embodiment - see Figure 7). This has been found to be beneficial because it creates the feeling of a relatively large suite, whilst also acting to maintain privacy and separation between passengers in the neighbouring seat units 311a, 311b of neighbouring pairs 309 (the monitor 343 now spanning most of the width of the seat unit when deployed).

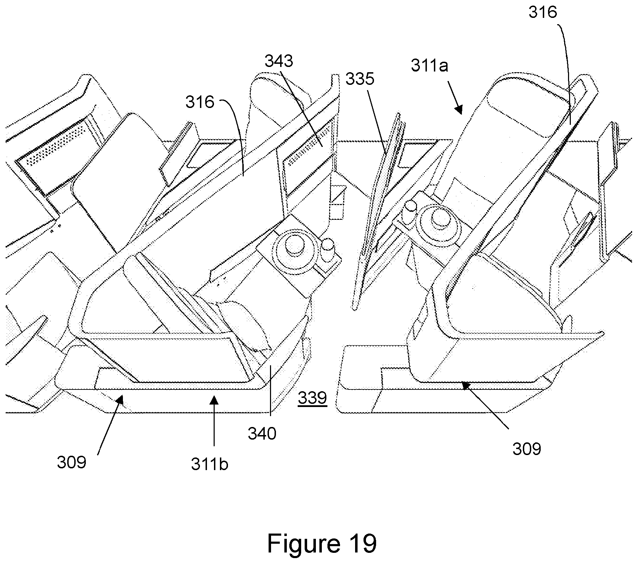

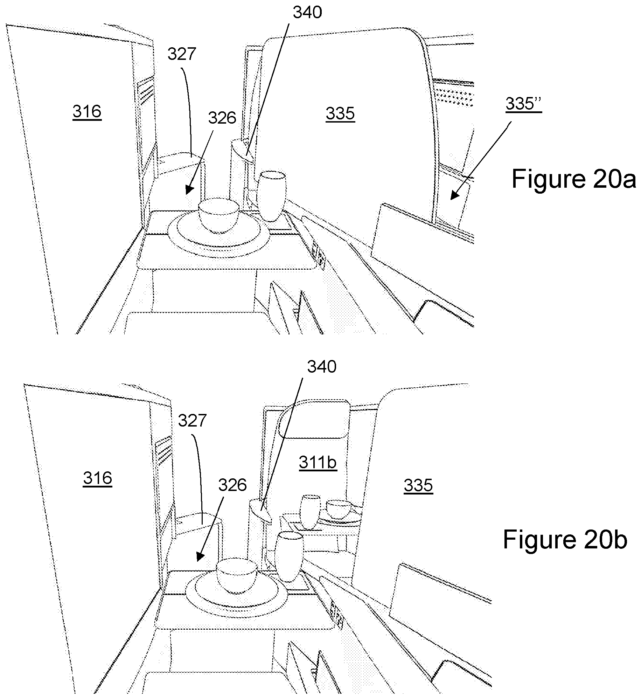

Secondly, it can be seen that there is no moveable intra-pair screen in this embodiment. Instead, a solid and fixed screen 316 extends between the inward and outwardly-facing seat units 311a/311b in each pair of units 309. There is still the ability to create a shared space between neighbouring seat units of neighbouring pairs via the inter-pair screen 335 and this is now described in more detail with reference to Figures 19, 20a and 20b.

Figure 19 shows a perspective view in which the inwardly-facing seat unit 311a of one pair and the outwardly-facing seat unit 311b of the neighbouring pair are ready for dining (i.e. tables deployed and laid for eating). A perspective view from the view point of the inwardly-facing seat unit 311a is shown in Figure 20a. In this case the inter-pair screen 335 is deployed in a forwards position and creates a private environment. There is a space 335" between the screen 335 and the sidewall of the cabin but this does not significantly impact on privacy because it is not within line of sight of the neighbouring passenger. As shown in Figure 20b, to create a shared environment, the screen 335 slides back towards the sidewall and into this space 335". The passengers in respective inwardly and outwardly facing seat units can then readily interact when wanted but can readily switch back to a private environment at other times.

Finally, as shown in Figures 18a and 18b, the outwardly-facing seat units 311b of this embodiment comprise a moveable armrest 340 that may be raised or lowered. When it is in the lowered position, the moveable armrest facilitates access/egress into the seat unit (which passengers access via the shared entrance way 339).

## Claims

1. An aircraft cabin comprising a passenger seating arrangement, the passenger seating arrangement comprising a column (C1, C2)of seat units (11A, 11B) located adjacent an aisle, the column (C1, C2) of seat units (11A, 11B) and the aisle both extending in a longitudinal direction parallel to the longitudinal axis of the aircraft cabin, wherein:
the column (C1, C2) comprises a multiplicity of pairs (9) of seat units (11A, 11B) arranged consecutively along the longitudinal direction, each pair (9) of seat units comprising an inwardly-facing seat unit (11A) and an adjacent outwardly-facing seat unit, the inwardly-facing seat unit (11A) being angled at an acute angle to the longitudinal axis of the aircraft and facing inwardly towards the aisle, and the outwardly-facing seat unit (11B) being angled at an acute angle to the longitudinal axis of the aircraft but facing outwardly away from the aisle,
wherein the outwardly-facing seat units (11B) are facing one of forwards or backwards, and the inwardly-facing seat units (11A) are facing the other of forwards or backwards,
wherein each seat unit (11A, 11B) is configurable between a seating configuration and a flat-bed configuration, and
wherein the passenger seating arrangement further comprises a plurality of entrance ways (39), each entrance way (39) being located between a neighbouring pair of seat units, and each entrance way (39) being a shared entrance way to provide access from the aisle to two seat units (11A, 11B), the two seat units being an inwardly-facing seat unit (11A) of one pair and the neighbouring outwardly-facing seat unit (11B) of the neighbouring pair,
wherein an inter-pair privacy screen (35) is positioned between neighbouring pairs (9) of seat units, the inter-pair privacy screen (35) extending only part-way between the inwardly-facing seat unit (11A) of one pair and the neighbouring outwardly-facing seat unit (11B) of the neighbouring pair, thereby leaving an opening through which a passenger may pass to access one of said seat units,
wherein each inwardly-facing seat unit (11A) has a foot receiving end (25) configured to receive a passenger's feet when the inwardly-facing seat unit is in the flat-bed configuration, and wherein the foot receiving end (25) comprises a wall defining a partially enclosed space for receiving the passenger's feet,
wherein each outwardly-facing seat unit (11B) comprises a head-receiving end for receiving a passenger's head, and wherein the head receiving end adjoins the foot receiving end (25) of the inwardly-facing seat unit (11A) in the respective pair of seat units.

2. An aircraft cabin according to claim 1, wherein each seat unit (11A, 11B) comprises a seat body (23), the seat body (23) comprising moveable seating elements arranged such that when the seat unit is in the seating configuration the seating elements form a passenger seat but when the seat unit is in the flat-bed configuration, the seating elements form a substantially flat sleeping surface.

3. An aircraft cabin according to claim 1 or 2, wherein the inter-pair privacy screen (35) is configured to screen a line of sight between passengers seated in the inwardly-facing seat unit (11A) of the one pair (9) and the neighbouring outwardly-facing seat unit (11B) of the neighbouring pair (9).

4. Z An aircraft cabin according to any preceding claim, wherein the inter-pair privacy screen (35) extends in a direction away from the sidewall (7A, 7B) of the aircraft.

5. An aircraft cabin according to any preceding claim, wherein the inter-pair privacy screen (35) is configurable between a deployed configuration for maintaining privacy between passengers seated in the inwardly-facing seat unit (11A) of the one pair (9) and the neighbouring outwardly-facing seat unit (11B) of the neighbouring pair (9), and a stowed configuration for enabling those passengers to interact.

6. An aircraft cabin according to any preceding claim , wherein the acute angle is in a range between 35 and 50 degrees.

7. An aircraft cabin according to any preceding claim , wherein the shared entrance way is defined between part of an outwardly-facing seat unit of one pair of seat units (11A, 11B), and the foot receiving end (25) of the neighbouring inwardly-facing seat unit (11A) of the neighbouring pair of seat units.

8. An aircraft cabin according to claim 2, wherein the moveable seating elements comprise a seat pan (17), and the seat pan of each seat unit (11A, 11B) comprises a chamfered corner adjacent an access path through the shared entrance way.

9. An aircraft cabin according to claim 8, wherein the chamfered corner is on the same side of each seat pan (17), as viewed from each respective seat pan.

10. An aircraft cabin according to any preceding claim, wherein the inwardly and outwardly-facing seat units (11A, 11B) in each pair (9) of seat units, border each other along a shared boundary.

11. An aircraft cabin according to claim 10, each pair (9) of seat units (11A, 11B) comprises an intra-pair privacy screen (15) along the shared boundary, for screening the two seat units within each pair, from each other.

12. An aircraft cabin according to any preceding claim, wherein the seating arrangement further comprise a second column (C2) of seat units (11A, 11B) located on the other side of, but adjacent to, the aisle, the second column (C2) of seat units also extending in a longitudinal direction parallel to the longitudinal axis of the aircraft cabin, and wherein
the second column (C2) comprises a multiplicity of pairs (9)of seat units arranged consecutively along the longitudinal direction, each pair (9) of seat units (11A, 11B) comprising an inwardly-facing seat unit (11A) and an adjacent outwardly-facing seat unit (11B), the inwardly-facing seat unit being angled at the acute angle to the longitudinal axis of the aircraft and facing inwardly towards the aisle, and the outwardly-facing seat unit being angled at the acute angle to the longitudinal axis of the aircraft but facing outwardly away from the aisle,
wherein the outwardly-facing seat units (11B) are facing one of forwards or backwards, and the inwardly-facing seat units (11A) are facing the other of forwards or backwards,
wherein each seat unit is configurable between a seating configuration and a flat-bed configuration, and
wherein the passenger seating arrangement further comprises a plurality of entrance ways, each entrance way being located between a neighbouring pair (9) of seat units (11A, 11B), and each entrance way being a shared entrance way to provide access from the aisle to two seat units, the two seat units being an inwardly-facing seat unit (11A) of one pair (9) and the neighbouring outwardly-facing seat unit (11B) of the neighbouring pair (9),
wherein an inter-pair privacy screen (35) is positioned between neighbouring pairs (9) of seat units (11A, 11B), the inter-pair privacy screen extending only part-way between the inwardly-facing seat unit (11A) of one pair (9) and the neighbouring outwardly-facing seat unit (11B) of the neighbouring pair (9), thereby leaving an opening through which a passenger may pass to access one of said seat units,
wherein each inwardly-facing seat unit (11A) has a foot receiving end (25) configured to receive a passenger's feet when the inwardly-facing seat unit is in the flat-bed configuration, and wherein the foot receiving end (25) comprises a wall defining a partially enclosed space for receiving the passenger's feet,
wherein each outwardly-facing seat unit (11B) comprises a head-receiving end for receiving a passenger's head, and wherein the head receiving end adjoins the foot receiving end (25) of the inwardly-facing seat unit in the respective pair (9) of seat units.

13. An aircraft cabin according to claim 12, wherein the first column (C1) is positioned adjacent a sidewall of the cabin and second column (C2) is positioned adjacent the opposing sidewall of the cabin.

14. An aircraft cabin according to claim 12, wherein the first column (C1) is positioned adjacent a sidewall of the cabin, the second column (C2) is positioned adjacent a second aisle, and the arrangement further comprises a third column (C3) of pairs (9) of seat units (11A, 11B) between the opposing sidewall and the second aisle.

## Patentansprüche

1. Flugzeugkabine umfassend eine Passagiersitzanordnung, wobei die Passagiersitzanordnung eine Reihe (C1, C2) von Sitzeinheiten (11A, 11B) umfasst, die neben einem Gang angeordnet sind und die Reihe (C1, C2) von Sitzeinheiten (11A, 11B) und der Gang sich beide in Längsrichtung parallel zur Längsachse der Flugzeugkabine erstrecken, wobei:
die Reihe (C1, C2) eine Vielzahl von Paaren (9) von Sitzeinheiten (11A, 11B) umfasst, die nacheinander entlang der Längsrichtung angeordnet sind, wobei jedes Paar (9) von Sitzeinheiten eine nach innen gerichtete Sitzeinheit (11A) und eine benachbarte nach außen gerichtete Sitzeinheit umfasst, wobei die nach innen gerichtete Sitzeinheit (11A) in einem spitzen Winkel zur Längsachse des Flugzeugs abgewinkelt und nach innen zum Gang gerichtet ist, und wobei die nach außen gerichtete Sitzeinheit (11B) in einem spitzen Winkel zur Längsachse des Flugzeugs abgewinkelt ist, aber vom Gang weg nach außen zeigt;
wobei die nach außen gerichteten Sitzeinheiten (11B) entweder nach vorne oder nach hinten zeigen und die nach innen gerichteten Sitzeinheiten (11A) entgegengesetzt nach vorne oder nach hinten zeigen,
wobei jede Sitzeinheit (11A, 11B) zwischen einer Sitzkonfiguration und einer Flachbettkonfiguration konfigurierbar ist, und
wobei die Passagiersitzanordnung weiterhin mehrere Eingangswege (39) umfasst, wobei jeder Eingangsweg (39) zwischen einem benachbarten Paar von Sitzeinheiten angeordnet ist und jeder Eingangsweg (39) ein gemeinsamer Eingangsweg ist, um den Zugang vom Gang zu zwei Sitzeinheiten (11A, 11B) bereitzustellen, wobei die zwei Sitzeinheiten eine nach innen gerichtete Sitzeinheit (11A) eines Paares und die benachbarte nach außen gerichtete Sitzeinheit (11B) des benachbarten Paares sind,
wobei ein Zwischenpaar-Sichtschutz (35) zwischen benachbarten Paaren (9) von Sitzeinheiten positioniert ist, wobei sich der Zwischenpaar-Sichtschutz (35) nur teilweise zwischen der nach innen gerichteten Sitzeinheit (11A) eines Paares und der benachbarten nach außen gerichteten Sitzeinheit (11B) des benachbarten Paares erstreckt, wodurch eine Öffnung verbleibt, die ein Passagier passieren kann, um in eine der Sitzeinheiten zu gelangen,
wobei jede nach innen gerichtete Sitzeinheit (11A) ein Fußaufnahmeende (25) aufweist, das konfiguriert ist, um die Füße eines Passagiers aufzunehmen, wenn sich die nach innen gerichtete Sitzeinheit in der Flachbettkonfiguration befindet und wobei das Fußaufnahmeende (25) eine Wand umfasst, die einen teilweise geschlossenen Raum zum Aufnehmen der Füße des Passagiers definiert,
wobei jede nach außen gerichtete Sitzeinheit (11B) ein Kopfaufnahmeende zum Aufnehmen des Kopfs eines Passagiers umfasst und wobei das Kopfaufnahmeende an das Fußaufnahmeende (25) der nach innen gerichteten Sitzeinheit (11A) im jeweiligen Paar von Sitzeinheiten angrenzt.

2. Flugzeugkabine nach Anspruch 1, wobei jede Sitzeinheit (11A, 11B) einen Sitzkörper (23) umfasst, wobei der Sitzkörper (23) bewegliche Sitzelemente umfasst, die so angeordnet sind, dass, wenn sich die Sitzeinheit in der Sitzkonfiguration befindet, die Sitzelemente einen Passagiersitz bilden, wenn sich die Sitzeinheit jedoch in der Flachbettkonfiguration befindet, die Sitzelemente eine im Wesentlichen flache Schlaffläche bilden.

3. Flugzeugkabine nach Anspruch 1 oder 2, wobei der Zwischenpaar-Sichtschutz (35) so konfiguriert ist, dass er eine Sichtlinie zwischen Passagieren, die in der nach innen gerichteten Sitzeinheit (11A) des einen Paares (9) und der benachbarten nach außen gerichteten Sitzeinheit (11B) des benachbarten Paares sitzen, zu verdecken.

4. Flugzeugkabine nach einem der vorhergehenden Ansprüche, wobei sich der Zwischenpaar-Sichtschutz (35) in einer Richtung weg von der Seitenwand (7A, 7B) des Flugzeugs erstreckt.

5. Flugzeugkabine nach einem der vorhergehenden Ansprüche, wobei der Zwischenpaar-Sichtschutz (35) konfiguriert werden kann zwischen einer eingesetzten Konfiguration zum Aufrechterhalten der Privatsphäre zwischen Passagieren, die in der nach innen gerichteten Sitzeinheit (11A) des einen Paares (9) und der benachbarten nach außen gerichteten Sitzeinheit (11B) des benachbarten Paares (9) sitzen und einer verstauten Konfiguration, um diesen Passagieren die Interaktion zu ermöglichen.

6. Flugzeugkabine nach einem der vorhergehenden Ansprüche, wobei der spitze Winkel in einem Bereich zwischen 35 und 50 Grad liegt.

7. Flugzeugkabine nach einem der vorhergehenden Ansprüche, wobei der gemeinsame Eingangsweg zwischen einem Teil einer nach außen gerichteten Sitzeinheit eines Paares von Sitzeinheiten (11A, 11B) und dem Fußaufnahmeende (25) der benachbarten nach innen gerichteten Sitzeinheit (11A) des benachbarten Paars von Sitzeinheiten definiert ist.

8. Flugzeugkabine nach Anspruch 2, wobei die beweglichen Sitzelemente eine Sitzschale (17) umfassen und die Sitzschale jeder Sitzeinheit (11A, 11B) eine abgeschrägte Ecke neben einem Zugangsweg durch den gemeinsamen Eingangsweg umfasst.

9. Flugzeugkabine nach Anspruch 8, wobei sich die abgeschrägte Ecke von jeder jeweiligen Sitzschale aus gesehen auf derselben Seite jeder Sitzschale (17) befindet.

10. Flugzeugkabine nach einem der vorhergehenden Ansprüche, wobei die nach innen und außen gerichteten Sitzeinheiten (11A, 11B) in jedem Paar (9) von Sitzeinheiten entlang einer gemeinsamen Grenze aneinander grenzen.

11. Flugzeugkabine nach Anspruch 10, wobei jedes Paar (9) von Sitzeinheiten (11A, 11B) einen Zwischenpaar-Sichtschutz (15) entlang der gemeinsamen Grenze umfasst, um die zwei Sitzeinheiten innerhalb jedes Paares voneinander abzuschirmen.

12. Flugzeugkabine nach einem der vorhergehenden Ansprüche, wobei die Sitzanordnung ferner eine zweite Reihe (C2) von Sitzeinheiten (11A, 11B) umfasst, die auf der anderen Seite des Ganges angeordnet ist, aber neben diesem, wobei sich die zweite Reihe (C2) von Sitzeinheiten ebenfalls in Längsrichtung parallel zur Längsachse der Flugzeugkabine erstreckt, und wobei
die zweite Reihe (C2) eine Vielzahl von Paaren (9) von Sitzeinheiten umfasst, die nacheinander entlang der Längsrichtung angeordnet sind, wobei jedes Paar (9) von Sitzeinheiten (11A, 11B) eine nach innen gerichtete Sitzeinheit (11A) und eine benachbarte nach außen gerichtete Sitzeinheit (11B) umfasst, wobei die nach innen gerichtete Sitzeinheit in einem spitzen Winkel zur Längsachse des Flugzeugs abgewinkelt und nach innen zum Gang gerichtet ist, und wobei die nach außen gerichtete Sitzeinheit in einem spitzen Winkel zur Längsachse des Flugzeugs abgewinkelt ist, aber vom Gang weg nach außen zeigt;
wobei die nach außen gerichteten Sitzeinheiten (11B) entweder nach vorne oder nach hinten zeigen und die nach innen gerichteten Sitzeinheiten (11A) entgegengesetzt nach vorne oder nach hinten zeigen,
wobei jede Sitzeinheit zwischen einer Sitzkonfiguration und einer Flachbettkonfiguration konfigurierbar ist, und
wobei die Passagiersitzanordnung weiterhin mehrere Eingangswege umfasst, wobei jeder Eingangsweg zwischen einem benachbarten Paar (9) von Sitzeinheiten (11A, 11B) angeordnet ist und jeder Eingangsweg ein gemeinsamer Eingangsweg ist, um den Zugang vom Gang zu zwei Sitzeinheiten bereitzustellen, wobei die zwei Sitzeinheiten eine nach innen gerichtete Sitzeinheit (11A) eines Paares (9) und die benachbarte nach außen gerichtete Sitzeinheit (11B) des benachbarten Paares (9) sind,
wobei ein Zwischenpaar-Sichtschutz (35) zwischen benachbarten Paaren (9) von Sitzeinheiten (11A, 11B) positioniert ist, wobei sich der Zwischenpaar-Sichtschutz nur teilweise zwischen der nach innen gerichteten Sitzeinheit (11A) eines Paares (9) und der benachbarten nach außen gerichteten Sitzeinheit (11B) des benachbarten Paares (9) erstreckt, wodurch eine Öffnung verbleibt, die ein Passagier passieren kann, um in eine der Sitzeinheiten zu gelangen,
wobei jede nach innen gerichtete Sitzeinheit (11A) ein Fußaufnahmeende (25) aufweist, das konfiguriert ist, um die Füße eines Passagiers aufzunehmen, wenn sich die nach innen gerichtete Sitzeinheit in der Flachbettkonfiguration befindet und wobei das Fußaufnahmeende (25) eine Wand umfasst, die einen teilweise geschlossenen Raum zum Aufnehmen der Füße des Passagiers definiert,
wobei jede nach außen gerichtete Sitzeinheit (11B) ein Kopfaufnahmeende zum Aufnehmen des Kopfs eines Passagiers umfasst und wobei das Kopfaufnahmeende an das Fußaufnahmeende (25) der nach innen gerichteten Sitzeinheit im jeweiligen Paar (9) von Sitzeinheiten angrenzt.

13. Flugzeugkabine nach Anspruch 12, wobei die erste Reihe (C1) neben einer Seitenwand der Kabine positioniert ist und die zweite Reihe (C2) neben der gegenüberliegenden Seitenwand der Kabine positioniert ist.

14. Flugzeugkabine nach Anspruch 12, wobei die erste Reihe (C1) neben einer Seitenwand der Kabine positioniert ist, die zweite Reihe (C2) neben einem zweiten Gang positioniert ist und die Anordnung ferner eine dritte Reihe (C3) von Paaren (9) von Sitzeinheiten (11A, 11B) zwischen der gegenüberliegenden Seitenwand und dem zweiten Gang umfasst.

## Revendications

1. Cabine d'aéronef comprenant un agencement de sièges passagers, l'agencement de sièges passagers comprenant une colonne (C1, C2) d'unités de sièges (11A, 11B) située adjacente à une allée, la colonne (C1, C2) d'unités de sièges (11A, 11B) et l'allée s'étendant chacune dans une direction longitudinale parallèle à l'axe longitudinal de la cabine d'aéronef :
où la colonne (C1, C2) comprend une multiplicité de paires (9) d'unités de sièges (11A, 11B) agencées consécutivement le long de la direction longitudinale, chaque paire (9) d'unités de sièges comprenant une unité de siège qui fait face vers l'intérieur (11A) et une unité de siège adjacente qui fait face vers l'extérieur, l'unité de siège qui fait face vers l'intérieur (11A) faisant un angle aigu par rapport à l'axe longitudinal de l'aéronef et faisant face vers l'intérieur vers l'allée, et l'unité de siège qui fait face vers l'extérieur (11B) faisant un angle aigu par rapport à l'axe longitudinal de l'aéronef, mais faisant face vers l'extérieur en s'éloignant de l'allée,
où les unités de sièges qui font face vers l'extérieur (11B) font face vers l'avant ou vers l'arrière, et les unités de siège qui font vers l'intérieur (11A) font face vers l'arrière ou vers l'avant,
où chaque unité de siège (11A, 11B) peut être configurée entre une configuration assise et une configuration allongée à plat, et
où l'agencement de sièges passagers comprend en outre une multiplicité de voies d'accès (39), chaque voie d'accès (39) se situant entre une paire voisine d'unités de sièges, et chaque voie d'accès (39) étant une voie d'accès partagée afin de fournir un accès à deux unités de sièges (11A, 11B) à partir de l'allée, les deux unités de sièges étant une unité de siège qui fait face vers l'intérieur (11A) d'une paire et l'unité voisine de siège qui fait face vers l'extérieur (11B) de la paire voisine,
où un écran d'intimité entre paires (35) est positionné entre des paires voisines (9) d'unités de sièges, l'écran d'intimité entre paires (35) s'étendant seulement en partie entre l'unité de siège qui fait face vers l'intérieur (11A) d'une paire et l'unité voisine de siège qui fait face vers l'extérieur (11B) de la paire voisine, en laissant de ce fait une ouverture à travers laquelle un passager peut passer afin d'accéder à l'une desdites unités de sièges,
où chaque unité de siège qui fait face vers l'intérieur (11A) présente une extrémité de réception des pieds (25) configurée pour recevoir les pieds d'un passager lorsque l'unité de siège qui fait face vers l'intérieur se trouve dans la configuration allongée à plat, et où l'extrémité de réception des pieds (25) comprend une paroi qui définit un espace en partie fermé destiné à recevoir les pieds du passager,
où chaque unité de siège qui fait face vers l'extérieur (11B) comprend une extrémité de réception de la tête destinée à recevoir la tête d'un passager, et où l'extrémité de réception de la tête est contiguë à l'extrémité de réception des pieds (25) de l'unité de siège qui fait face vers l'intérieur (11A) de la paire respective d'unités de sièges.

2. Cabine d'aéronef selon la revendication 1,
où chaque unité de siège (11A, 11B) comprend un corps de siège (23), le corps de siège (23) comprenant des éléments d'assise mobiles agencés de telle sorte que, lorsque l'unité de siège se trouve dans la configuration assise, les éléments d'assise forment un siège de passager mais, lorsque l'unité de siège se trouve dans la configuration allongée à plat, les éléments d'assise forment une surface de couchage sensiblement plate.

3. Cabine d'aéronef selon la revendication 1 ou 2,
où l'écran d'intimité entre paires (35) est configuré pour occulter le champ de vision entre des passagers assis dans l'unité de siège qui fait face vers l'intérieur (11A) d'une paire (9) et dans l'unité voisine de siège qui fait face vers l'extérieur (11B) de la paire voisine (9).

4. Cabine d'aéronef selon l'une quelconque des revendications précédentes,
où l'écran d'intimité entre paires (35) s'étend dans une direction en s'éloignant de la paroi latérale (7A, 7B) de l'aéronef.

5. Cabine d'aéronef selon l'une quelconque des revendications précédentes,
où l'écran d'intimité entre paires (35) peut être configuré entre une configuration déployée destinée à maintenir une intimité entre des passagers assis dans l'unité de siège qui fait face vers l'intérieur (11A) d'une paire (9), et dans l'unité voisine de siège qui fait face vers l'extérieur (11B) de la paire voisine (9), et une configuration rangée destinée à permettre à ces passagers d'interagir.

6. Cabine d'aéronef selon l'une quelconque des revendications précédentes,
où l'angle aigu se situe dans une plage comprise entre 35 et 50 degrés.

7. Cabine d'aéronef selon l'une quelconque des revendications précédentes,
où la voie d'accès partagée est définie entre une partie d'une unité de siège qui fait face vers l'extérieur d'une paire d'unités de sièges (11A, 11B), et l'extrémité de réception des pieds (25) de l'unité de siège voisine qui fait face vers l'intérieur (11A) de la paire voisines d'unités de sièges.

8. Cabine d'aéronef selon la revendication 2,
où les éléments d'assise mobiles comprennent un fond de siège (17), et le fond de siège de chaque unité de siège (11A, 11B) comprend un coin chanfreiné adjacent à un chemin d'accès à travers la voie d'accès partagée.

9. Cabine d'aéronef selon la revendication 8,
où le coin chanfreiné est du même côté de chaque fond de siège (17), quand on regarde à partir de chaque fond de siège respectif.

10. Cabine d'aéronef selon l'une quelconque des revendications précédentes,
où les unités de sièges qui font face vers l'intérieur et vers l'extérieur (11A, 11B) de chaque paire (9) d'unités de sièges, se touchent l'une l'autre le long d'une frontière partagée.

11. Cabine d'aéronef selon la revendication 10,
où chaque paire (9) d'unités de sièges (11A, 11B) comprend un écran d'intimité dans la paire (15) le long de la frontière partagée, afin de masquer les deux unités de sièges de chaque paire, l'une vis-à-vis de l'autre.

12. Cabine d'aéronef selon l'une quelconque des revendications précédentes,
où l'agencement de sièges comprend en outre une deuxième colonne (C2) d'unités de sièges (11A, 11B) située de l'autre côté de l'allée, mais adjacente à celle-ci, la deuxième colonne (C2) d'unités de sièges s'étendant également dans une direction longitudinale parallèle à l'axe longitudinal de la cabine d'aéronef, et
où la deuxième colonne (C2) comprend une multiplicité de paires (9) d'unités de sièges agencées consécutivement le long de la direction longitudinale, chaque paire (9) d'unités de sièges (11A, 11B) comprenant une unité de siège qui fait face vers l'intérieur (11A) et une unité de siège adjacente qui fait face vers l'extérieur (11B), l'unité de siège qui fait face vers l'intérieur faisant un angle aigu par rapport à l'axe longitudinal de l'aéronef et faisant face vers l'intérieur vers l'allée, et l'unité de siège qui fait face vers l'extérieur faisant un angle aigu par rapport à l'axe longitudinal de l'aéronef mais faisant face vers l'extérieur en s'éloignant de l'allée,
où les unités de sièges qui font face vers l'extérieur (11B) font face vers l'avant ou vers l'arrière, et les unités de siège qui font vers l'intérieur (11A) font face vers l'arrière ou vers l'avant,
où chaque unité de siège peut être configurée entre une configuration assise et une configuration allongée à plat, et
où l'agencement de sièges passagers comprend en outre une pluralité de voies d'accès, chaque voie d'accès se situant entre une paire voisine (9) d'unités de sièges (11A, 11B), et chaque voie d'accès étant une voie d'accès partagée afin de fournir un accès à deux unités de sièges à partir de l'allée, les deux unités de sièges étant une unité de siège qui fait face vers l'intérieur (11A) d'une paire (9) et l'unité voisine de siège qui fait face vers l'extérieur (11B) de la paire voisine (9),
où un écran d'intimité entre paires (35) est positionné entre des paires voisines (9) d'unités de sièges (11A, 11B), l'écran d'intimité entre paires s'étendant seulement en partie entre l'unité de siège qui fait face vers l'intérieur (11A) d'une paire et l'unité voisine de siège qui fait face vers l'extérieur (11B) de la paire voisine (9), en laissant de ce fait une ouverture à travers laquelle un passager peut passer afin d'accéder à l'une desdites unités de sièges,
où chaque unité de siège qui fait face vers l'intérieur (11A) présente une extrémité de réception des pieds (25) configurée pour recevoir les pieds d'un passager lorsque l'unité de siège qui fait face vers l'intérieur se trouve dans la configuration allongée à plat, et où l'extrémité de réception des pieds (25) comprend une paroi qui définit un espace en partie fermé destiné à recevoir les pieds du passager,
où chaque unité de siège qui fait face vers l'extérieur (11B) comprend une extrémité de réception de la tête destinée à recevoir la tête d'un passager, et où l'extrémité de réception de la tête est contiguë à l'extrémité de réception des pieds (25) de l'unité de siège qui fait face vers l'intérieur de la paire respective (9) d'unités de sièges.

13. Cabine d'aéronef selon la revendication 12,
où la première colonne (C1) est positionnée adjacente à une paroi latérale de la cabine, et la deuxième colonne (C2) est positionnée adjacente à la paroi latérale opposée de la cabine.

14. Cabine d'aéronef selon la revendication 12,
où la première colonne (C1) est positionnée adjacente à une paroi latérale de la cabine, la deuxième colonne (C2) est positionnée adjacente à un seconde allée, et l'agencement comprend en outre une troisième colonne (C3) de paires (9) d'unités de sièges (11A, 11B) entre la paroi latérale opposée et la seconde allée.
